# EUROPEAN PATENT APPLICATION

(11) **EP 3 866 479 A1**
(43) Date of publication of application: **18.08.2021**
(21) Application number: 20845657.4
(22) Date of filing: 22.07.2020
(51) Int. Cl.: H04N 21/442

(54) **TELEVISION PLAYBACK CONTROL METHOD AND SYSTEM, AND CONTROL TERMINAL AND STORAGE MEDIUM**

(30) Priority: 31.12.2019 CN 201911410169
(71) Applicant: Shenzhen Skyworth-Rgb Electronic Co., Ltd, Shenzhen, Guangdong 518052 (CN)
(72) Inventor: PAN, Weixiong, Shenzhen, Guangdong 518052 (CN); XIONG, Yueping, Shenzhen, Guangdong 518052 (CN); XU, Li, Shenzhen, Guangdong 518052 (CN)
(74) Representative: Manitz Finsterwald Patent- und Rechtsanwaltspartnerschaft mbB
(86) International application number: PCT/CN2020/103375
(87) International publication number: WO 2021/135172

(57) **Abstract**

The present disclosure relates to a method and a system for controlling play of a TV set, a control terminal and a storage medium, and discloses that a fire safety escape route is played on the TV set when a user stays at a hotel for the first time and information of related service scenes of the hotel is shown at the same time, thereby improving the safety awareness of the user, enabling the user to conveniently use the related service of the hotel and bringing convenience to the user.

## Description

### FIELD OF THE APPLICATION

The present disclosure relates to the technical field of Internet of Things, for example, relates to a method and a system for controlling play of a TV set, a control terminal and a storage medium.

### BACKGROUND

With the economic development, consumption is undergoing transformation and upgrading, and the requirements for staying at hotels during travel are getting higher and higher, consumers expect comfortable care and the hotels enable the customers to obtain comfortable service and receive more service from the hotels, thus obtaining more consumption income from the customers.

At present, color brochures of the hotel banquet hall, the meeting room, leisure and entertainment and catering may be arranged in the guest room of the hotel, the traditional hotel places the fire escape route at the fixed position, but few customers (users) really take the initiative to consult them. However, for the hotel side, it is equivalent to an additional cost, but it does not have the effect of publicity. It is not convenient for the customers to know the information, which cannot arouse the customers' interests in actively viewing and may not bring additional benefits to the hotel.

Therefore, the prior art still needs to be improved and developed.

### BRIEF SUMMARY OF THE DISCLOSURE

A main objective of the present disclosure is to provide a method and a system for controlling play of a TV set, a control terminal and a storage medium, for solving the above defects in the prior art.

To achieve the above objective, the present disclosure provides a method for controlling play of a TV set. The method for controlling play of the TV set comprises the following steps:

acquiring identity information of a user for identity authentication, controlling a guest room to unlock and supply power after the identity information passes the identity authentication;

reading blockchain data, turning on a welcoming mode of the TV set and controlling the TV set to play a safety escape route diagram in the blockchain data within a preset time;

after playing the safety escape route diagram, controlling the TV set to play hotel customer service information and recording the number of loop play times;

when the number of loop play times is greater than or equal to the number of preset times, turning off the welcoming mode of the TV set and controlling the TV set to turn on a normal play mode.

Optionally, in the method for controlling play of the TV set, the acquiring the identity information of the user for identity authentication, and controlling a guest room to unlock and supply power after the identity information passes the identity authentication specifically comprises:

when detecting that the user arrives at the guest room and performs the identity authentication, checking the identity of the user according to information registered by a reception or a mobile phone and unlocking the guest room after the identity information passes the identity authentication;

after the guest room is successfully unlocked, turning on a guest room power supply system when detecting that a room card is inserted or directly turning on the guest room power supply system to supply power.

Optionally, in the method for controlling play of the TV set, the reading blockchain data, turning on the welcoming mode of the TV set and controlling the TV set to play the safety escape route diagram in the blockchain data within the preset time specifically comprises:

after power supply is normal, controlling the TV set to turn on, reading the blockchain data in a blockchain database and setting a loop play counter to zero;

judging whether the welcoming mode of the TV set is turned on, if yes, controlling the TV set to play the safety escape route diagram in the blockchain data within the preset time and play preselected background music at a same time.

Optionally, in the method for controlling play of the TV set, a mode for turning on the welcoming mode of the TV set comprises: entering, by a receptionist, the identity information when the user checks in and the system automatically turns on, and the system automatically turns on in the background when the user checks in independently through the mobile phone.

Optionally, in the method for controlling play of the TV set, the welcoming mode is turned on only when the user successfully unlocks the guest room for the first time, the welcoming mode is turned off after execution, may be skipped when the user successfully unlocks the guest room next time.

Optionally, in the method for controlling play of the TV set, the after playing the safety escape route diagram, controlling the TV set to play hotel customer service information and recording the number of loop play times specifically comprises:

after playing the safety escape route diagram, continuously controlling the TV set to play the hotel customer service information in the blockchain data and detecting whether the user sends out an operating instruction to the TV set in real time;

if yes, turning off the welcoming mode of the TV set, and if not, playing the hotel customer service information to an end and adding one to the loop play counter.

Optionally, in the method for controlling play of the TV set, a method that the user sends out an operating instruction to the TV set comprises: the user operates the TV set by a remote controller and the user operates the TV set by a mobile phone.

Optionally, in the method for controlling play of the TV set, when the number of loop play times is greater than or equal to the number of preset times, turning off the welcoming mode of the TV set and controlling the TV set to turn on a normal play mode specifically comprises:

judging whether the number of loop play times recorded by the loop play counter is greater than or equal to the number of preset times;

if not, returning to continuously control the TV set to play the safety escape route diagram in the blockchain data within the preset time;

if yes, turning off the welcoming mode of the TV set and controlling the TV set to turn on a normal play mode.

Optionally, in the method for controlling play of the TV set, the blockchain data comprises: a safety escape route diagram, hotel customer service information and interested information of the user.

Optionally, in the method for controlling play of the TV set, the blockchain database prestores user data and the blockchain data.

Optionally, in the method for controlling play of the TV set, the interested information of the user is matched customized information which is recommended to the user after big data analysis is performed according to APP (Application) used by the user and personal information.

Optionally, in the method for controlling play of the TV set, the hotel customer service information comprises hotel banquet hall, meeting room, leisure and entertainment and catering service place information.

In addition, to achieve the above objective, the present disclosure further provides a control terminal. The control terminal comprises: a memory, a processor and a TV set play control program which is stored in the memory and may operate on the processor, the TV set play control program, when being executed by the processor, enables the processor to implement steps of the above method for controlling play of a TV set.

In addition, to achieve the above objective, the present disclosure further provides a system for controlling play of a TV set. The system for controlling play of a TV set comprises the above control terminal and further comprises a TV set connected to the control terminal.

The control terminal is configured to acquire the identity information of a user for identity authentication, and control a guest room to unlock and supply power after the identity information passes the identity authentication;

the control terminal reads blockchain data, controls the TV set to turn on a welcoming mode and controls the TV set to play a safety escape route diagram in the blockchain data within the preset time;

after the safety escape route diagram is played, the control terminal controls the TV set to play hotel customer service information and record the number of loop play times;

when the number of loop play times is greater than or equal to the number of preset times, turning off the welcoming mode of the TV set and controlling the TV set to turn on a normal play mode.

In addition, to achieve the above objective, the present disclosure further provides a storage medium. The storage medium stores a TV set play control program, the TV set play control program, when being executed by a processor, enables the processor to implement steps of the above method for controlling play of a TV set.

According to the present disclosure, identity authentication is performed by acquiring identity information of a user, and a guest room is controlled to unlock and supply power after the identity information passes the identity authentication; a blockchain data is read, a welcoming mode of the TV set is turned on, and the TV set is controlled to play a safety escape route diagram in the blockchain data within a preset time; when the safety escape route diagram is played, the TV set is controlled to play hotel customer service information and the number of loop play times is recorded; when the number of loop play times is greater than or equal to the number of preset times, turning off the welcoming mode of the TV set and controlling the TV set to turn on a normal play mode. According to the present disclosure, a fire safety escape route is played on a TV set when a user stays at a hotel for the first time and information of related service scenes of the hotel is shown at a same time, thereby improving the safety awareness of the user, enabling the user to conveniently use the related service of the hotel and bringing convenience to the user.

### BRIEF DESCRIPTION OF THE DRAWINGS

FIG. 1 illustrates a flowchart of a preferred embodiment of a method for controlling play of a TV set according to the present disclosure;
FIG. 2 illustrates a flowchart of step S10 in a preferred embodiment of a method for controlling play of a TV set according to the present disclosure;
FIG. 3 illustrates a flowchart of step S20 in a preferred embodiment of a method for controlling play of a TV set according to the present disclosure;
FIG. 4 illustrates a flowchart of step S30 in a preferred embodiment of a method for controlling play of a TV set according to the present disclosure;
FIG. 5 illustrates a flowchart of step S40 in a preferred embodiment of a method for controlling play of a TV set according to the present disclosure;
FIG. 6 illustrates a flowchart of a hotel entering related information in a preferred embodiment of a method for controlling play of a TV set according to the present disclosure;
FIG. 7 illustrates a schematic diagram of controlling a TV set to play related information in a preferred embodiment of a method for controlling play of a TV set according to the present disclosure;
FIG. 8 illustrates a schematic diagram of an operating environment of a preferred embodiment of a control terminal according to the present disclosure;
FIG. 9 illustrates a principle schematic diagram of a preferred embodiment of a system for controlling play of a TV set according to the present disclosure.

### DETAILED DESCRIPTION

To make the objectives, technical solutions and advantages of the present disclosure clearer, the present disclosure id further described below in detail with reference to the accompanying drawings and embodiments. It should be understood that the specific embodiments described herein are only for explaining the present disclosure, rather than for limiting the present disclosure.

### Embodiment 1

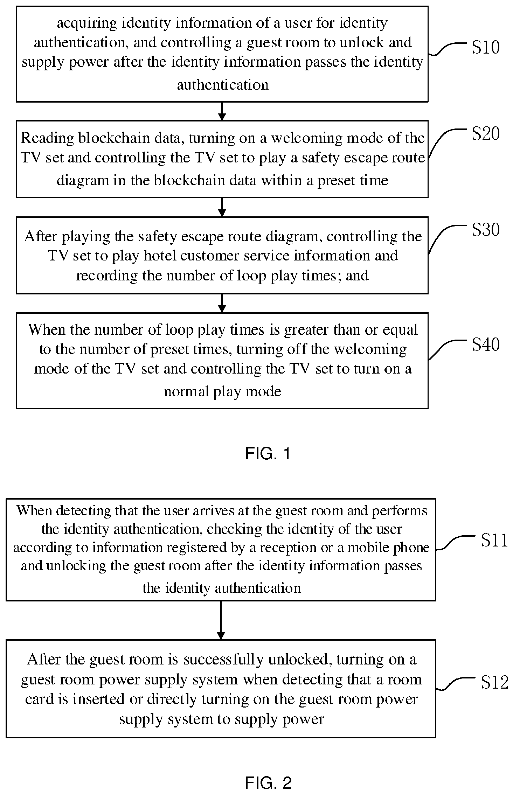

The preferred embodiment of the present disclosure provides a method for controlling play of a TV set, as shown in FIG. 1, the method for controlling play of the TV set comprises the following steps:

Step S10: the identity information of a user is acquired for identity authentication, a guest room is controlled to unlock and supply power after the identity information passes the identity authentication.

The specific process refers to FIG. 2 which is a flowchart of step S10 in a method for controlling play of a TV set provided by the present disclosure.

As shown in FIG. 2, the step S10 comprises:
S11: when the user is detected to arrive at the hotel and perform identity authentication, the identity of the user is checked according to information registered by a reception or a mobile phone, unlocking is performed after the identity information passes the identity authentication;
S12: after the guest room is unlocked successfully, a guest room power supply system is turned on when a room card is detected to be inserted or the guest room power supply system is directly turned on to supply power.

Specifically, after the user confirms a check-in through registration by the hotel reception or the mobile phone APP, when the user arrives at the appointed guest room, identity authentication (there are various ways for identity authentication, for example, swiping face, swiping an ID card, swiping a room card, etc. according to the identity authentication requirement of the guest room) is conducted, after the identity information passes the identity authentication, successful unlocking is realized (that is, the guest room is unlocked). After the guest room is unlocked successfully, the guest room power supply system is turned on when the room card is detected to be inserted (the most common way) or the guest room power supply system is directly turned on to supply power, that is, to supply power for the whole room.

Step S20: a blockchain data is read, a welcoming mode of the TV set is turned on and the TV set is controlled to play a safety escape route diagram in the blockchain data within a preset time.

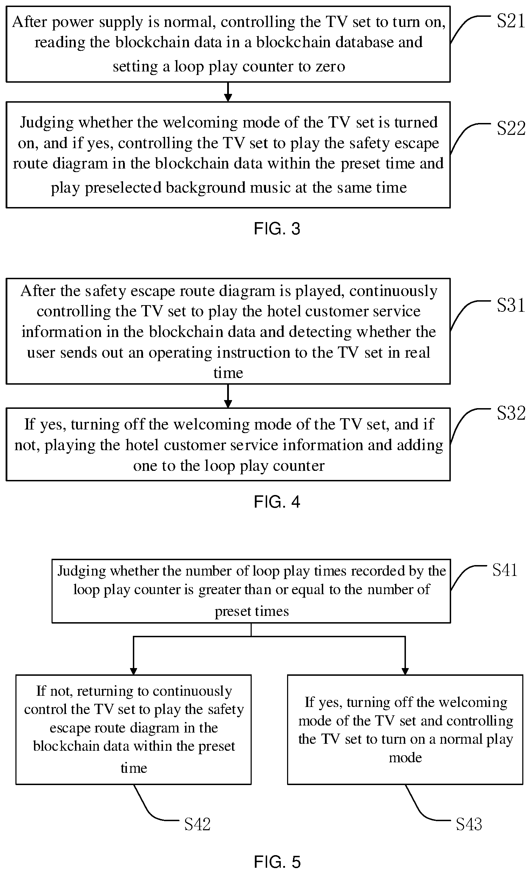

The specific process refers to FIG. 3 which is a flowchart of step S20 in a method for controlling play of a TV set provided by the present disclosure.

As shown in FIG. 3, the step S20 comprises:
S21: after power supply is normal, the TV set is controlled to turn on, the blockchain data in a blockchain database is read and a loop play counter is set to zero;
S22: whether the welcoming mode of the TV set is turned on is judged, if yes, the TV set is controlled to play the safety escape route diagram in the blockchain data within the preset time and play preselected background music at a same time.

Specifically, after power supply is normal, the TV set is powered on and turned on, blockchain data reading is started and the loop play counter is set to zero, the blockchain database prestores user data (such as the identity information of the user and other feature information) and the blockchain data; the blockchain data comprises: a safety escape route diagram (it is convenient for the user to know the escape route in advance, thereby avoiding that the user cannot withdraw from the hotel timely in case of an accident in the hotel), hotel customer service information and interested information of the user (the interested information of the user is matched customized information which is recommended to the user after big data analysis is performed according to APP used by the user and personal information); the hotel customer service information comprises hotel banquet hall, meeting room, leisure and entertainment and catering service place information, after seeing the information, the user may be stimulated to consume, thereby bringing convenience to the user and additional benefit to the hotel.

Further, whether the welcoming mode of the TV set is turned on (there are two ways to turn on the welcoming mode: one is that the information is entered by a receptionist when the user checks in and the system automatically turns on; and the other one is that when the user checks in independently through the mobile phone side, the system automatically turns on in the background. The welcoming mode is a flag bit from the program side and is used to mark that it is necessary to push welcoming data when the user unlocks and checks in for the first time) is judged. If not, the welcoming mode is not turned on because the welcoming mode is turned on only when the user successfully unlocks the guest room for the first time, the welcoming mode is turned off after execution, and may be skipped when the user successfully unlocks the guest room next time. Considering the experience feeling of the user, the user may stay for a few days, so there is no need to turn on the welcoming mode every time. If yes, the TV set is controlled to play the safety escape route diagram in the blockchain data within the preset time (such as 15 seconds) and play the pre-selected background music (mainly light music, such as Mozart's piano music) at the same time.

S30: after the safety escape route diagram is played, the TV set is controlled to play hotel customer service information and the number of loop play times is recorded.

The specific process refers to FIG. 4 which is a flowchart of step S30 in a method for controlling play of a TV set provided by the present disclosure.

As shown in FIG. 4, the step S30 comprises:
S31: after the safety escape route diagram is played, the TV set is continuously controlled to play the hotel customer service information in the blockchain data and whether the user sends out an operating instruction to the TV set is detected in real time;
S32: if yes, the welcoming mode of the TV set is turned off, if not, the hotel customer service information is played to an end and one is added to the loop play counter.

Specifically, after the safety escape route diagram is played (for example, the play time is 15 seconds), the TV set is continuously controlled to play hotel customer service information (mainly including hotel banquet hall, meeting room, leisure and entertainment, catering and other service place information) in the blockchain data, and whether the user sends out an operating instruction to the TV set is detected in real time (that is, whether the user operates the TV set by a remote controller or a mobile phone is detected, for example, the user may want to watch TV programs instead of the content which is being played by the TV set). If yes, the welcoming mode of the TV set is turned off; if not, the hotel customer service information is played to an end and one is added to the loop play counter (that is, one is added to the loop play counter after the safety escape route diagram and the hotel customer service information are played for one time).

S40: when the number of loop play times is greater than or equal to the number of preset times, the welcoming mode of the TV set is turned off and the TV set is controlled to turn on a normal play mode.

The specific process refers to FIG. 5 which is a flowchart of step S40 in a method for controlling play of a TV set provided by the present disclosure.

As shown in FIG. 5, the step S40 comprises:
S41: whether the number of loop play times recorded by the loop play counter is greater than or equal to the number of preset times is judged;
S42: if not, it is returned to continuously control the TV set to play the safety escape route diagram in the blockchain data within a preset time;
S43: if yes, the welcoming mode of the TV set is turned off and the TV set is controlled to turn on a normal play mode.

Specifically, whether the number of loop play times recorded by the loop play counter is greater than or equal to the number of preset times is judged (the number of preset times is preferably 4, that is, the number of loop play times of the safety escape route diagram and the hotel customer service information is 4), and whether the number of loop play times is greater than or equal to 4, if not, it is returned to continuously play the safety escape route diagram and the hotel customer service information; if yes, the welcoming mode of the TV set is turned off and the TV set is controlled to turn on a normal play mode, that is, to enter a normal TV set play mode.

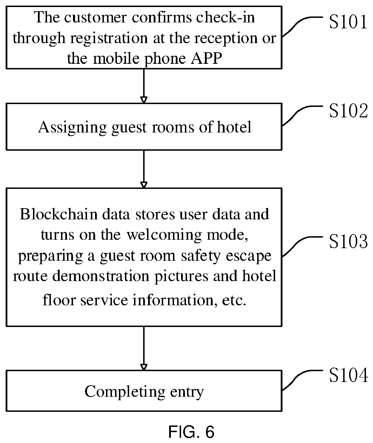

Further, as shown in FIG. 6, based on the blockchain data, the TV set customizes data according to the blockchain data reading flow the TV set customizes data according to the blockchain data reading flow and according to a plurality of requirements of the hotel and a plurality of personal requirements of the users (for example, the hotel newly introduces new services such as pedicure, etc. and actively pushes the information according to the big data analysis of the users using APP, keen on outdoor hiking and punching card in online celebrity stores), thereby achieving the welcoming effect of the hotel.

Customer information is entered by the hotel according to the following steps:
S101: the customer confirms check-in through registration at the reception or the mobile phone APP;
S102: a hotel background system assigns guest rooms;
S103: a blockchain data stores user data (such as big data captured by the APP of the user) and turning on the welcoming mode, preparing a guest room safety escape route demonstration pictures and hotel floor service information, etc.;
S104: entry is completed (entered into a blockchain database of the hotel background).

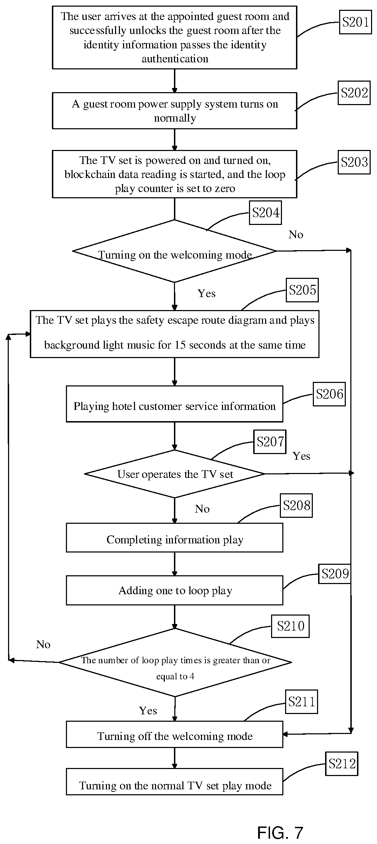

Further, as shown in FIG. 7, the hotel welcoming method is implemented as follows:
S201: The user arrives at the appointed guest room and successfully unlocks the guest room after the identity information passes the identity authentication;
S202: a guest room power supply system turns on normally;
S203: the TV set is turned on electrically, blockchain data reading is started, the loop play counter is set to zero;
S204: whether the welcoming mode is turned on is judged, if not, it may be skipped to S211;
S205: the TV set plays the safety escape route diagram and plays background light music for 15 seconds at a same time;
S206: the hotel customer service information (for example, pictures of hotel banquet hall, meeting room, leisure and entertainment, catering and the like, in any forms which may be pictures, videos, web pages, etc.) is played;
S207: whether the customer operates the TV set is judged, if yes, it may be skipped to S211;
S208: information play is completed;
S209: one is added to loop play;
S210: whether the number of loop play times is greater than or equal to 4 is judged, if not, it may be skipped to S205;
S211: the welcoming mode is turned off;
S212: the normal TV set play mode is turned on.

According to the present disclosure, the original passive state of the TV set is changed without changing the layout of the hotel, information is actively pushed to the customers, differentiated service is created for the hotel, and the TV set actively provides intelligent service for the customers based on the blockchain data. When the customers stay in the hotel for the first time, the TV set plays the fire safety escape route and shows pictures of hotel banquet hall, meeting room, leisure and entertainment, catering and the like at the same time, together with the background light music (such as Mozart piano music), thereby making the customers feel at home and enhancing the user experience.

### Embodiment 2

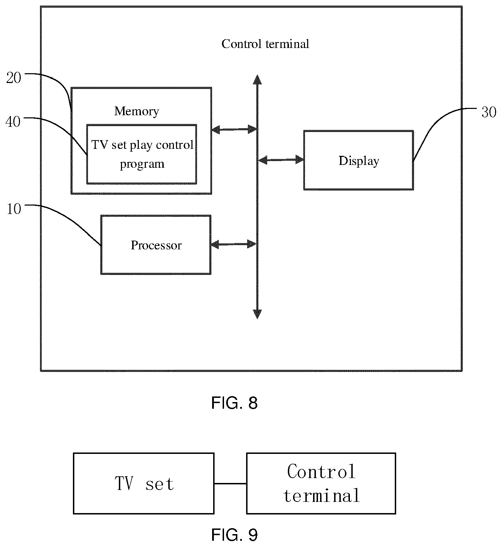

Further, as shown in FIG. 8, based on the above method for controlling play of a TV set, the present disclosure correspondingly provides a smart television, the smart television comprises a processor 10, a memory 20 and a display 30. FIG. 8 only shows some assemblies of the smart television, but it should be understood that it is not required to implement all the shown assemblies, and more or fewer assemblies may be implemented instead.

In some embodiments, the memory 20 may be an internal memory unit of the smart television, for example a hard disk or a memory of the smart television. In some other embodiments, the memory 20 may also be an external memory device of the smart television, for example, a pluggable hard disk, a smart media card (SMC), a secure digital (SD) card, a flash card, etc. which the smart television is equipped with. Further, the memory 20 may comprise an internal memory unit of the smart television and may also comprise an external memory device. The memory 20 is configured to store application software and various data installed in the smart television, such as program codes installed in the smart television and the like. The memory 20 may further be configured to temporarily store data which has been output or is going to be output. In one embodiment, the memory 20 stores a TV set play control program 40, the TV set play control program 40 may be executed by the processor 10 so as to implement the method for controlling play of the TV set of the present application.

In some embodiments, the processor 10 may be a central processing unit (CPU), a microprocessor or other data processing chip for processing data or operating program codes stored in the memory 20, for example, implementing the method for controlling play of the TV set.

In some embodiments, the display 30 may be an LED display, a liquid crystal display, a touch control liquid crystal display and an organic light-emitting diode (OLED) touch device, etc.

The display 30 is configured to display information of the smart television and display a visual user interface. A plurality of parts 10-30 of the smart television communicate with each other through system buses.

In some embodiments, when executing the TV set play control program 40 in the memory 20, the processor 10 implements the following steps:
acquiring identity information of a user for identity authentication, controlling a guest room to unlock and supply power after the identity information passes the identity authentication;
a blockchain data is read, a welcoming mode of the TV set is turned on and the TV set is controlled to play a safety escape route diagram in the blockchain data within a preset time;
after the safety escape route diagram is played, the TV set is controlled to play hotel customer service information and the number of loop play times is recorded;
when the number of loop play times is greater than or equal to the number of preset times, the welcoming mode of the TV set is turned off and the TV set is controlled to turn on a normal play mode.

The step that the identity information of the user is acquired for identity authentication, a guest room is controlled to unlock and supply power after the identity information passes the identity authentication specifically comprises:
when detecting that the user arrives at the guest room and performs the identity authentication, checking the identity of the user according to information registered by a reception or a mobile phone and unlocking the guest room after the identity information passes the identity authentication;
after the guest room is unlocked successfully, a guest room power supply system is turned on when a room card is detected to be inserted or the guest room power supply system is directly turned on to supply power.

The step that a blockchain data is read, the welcoming mode of the TV set is turned on and the TV set is controlled to play the safety escape route diagram in the blockchain data within the preset time specifically comprises:
after power supply is normal, the TV set is controlled to turn on, the blockchain data in a blockchain database is read and a loop play counter is set to zero;
whether the welcoming mode of the TV set is turned on is judged, if yes, the TV set is controlled to play the safety escape route diagram in the blockchain data within the preset time and play preselected background music at a same time.

A mode for turning on the welcoming mode of the TV set comprises: entering, by a receptionist, the identity information when the user checks in and the system automatically turns on, the system automatically turns on in the background when the user checks in independently through the mobile phone.

The welcoming mode is turned on only when the user successfully unlocks the guest room for the first time, the welcoming mode is turned off after execution, may be skipped when the user successfully unlocks the guest room next time.

The step that after the safety escape route diagram is played, the TV set is controlled to play hotel customer service information and the number of loop play times is recorded specifically comprises:
after the safety escape route diagram is played, the TV set is continuously controlled to play the hotel customer service information in the blockchain data and whether the user sends out an operating instruction to the TV set is detected in real time;
if yes, the welcoming mode of the TV set is turned off, and if not, the hotel customer service information is played and one is added to the loop play counter.
a method that the user sends out the operating instruction to the TV set comprises: the user operates the TV set by a remote controller and the user operates the TV set by a mobile phone.

The step that when the number of loop play times is greater than or equal to the number of preset times, the welcoming mode of the TV set is turned off and the TV set is controlled to turn on the normal play mode specifically comprises:
whether the number of loop play times recorded by the loop play counter is greater than or equal to the number of preset times is judged;
if not, it is returned to continuously control the TV set to play the safety escape route diagram in the blockchain data within the preset time; and
if yes, the welcoming mode of the TV set is turned off and the TV set is controlled to turn on a normal play mode.

The blockchain data comprises: a safety escape route diagram, hotel customer service information and interested information of the user.

The blockchain database prestores user data and the blockchain data.

The interested information of the user is matched customized information which is recommended to the user after big data analysis is performed according to APP used by the user and personal information.

The hotel customer service information comprises hotel banquet hall, meeting room, leisure and entertainment and catering service place information.

### Embodiment 3

As shown in FIG. 9, the present disclosure further provides a system for controlling play of a TV set. The system for controlling play of the TV set comprises the above control terminal and further comprises a TV set connected to the control terminal, the control terminal is configured to acquire the identity information of a user for identity authentication and control a guest room to unlock and supply power after identity authentication passes; the control terminal reads blockchain data, controls the TV set to play a safety escape route diagram in the blockchain data within a preset time and controls the TV set to play the safety escape route diagram within the preset time; after the safety escape route diagram is played, the control terminal controls the TV set to play hotel customer service information and records the number of loop play times; when the number of loop play times is greater than the number of preset times, the control terminal turns off the welcoming mode of the TV set and controls the TV set to turn on a normal play mode.

### Embodiment 4

The present disclosure further provides a storage medium. The storage medium stores a TV set play control program, the TV set play control program, when being executed by a processor, enables the processor to implement steps of the above method for controlling play of a TV set.

In conclusion, the present disclosure provides a method and a system for controlling play of a TV set, a control terminal and a storage medium. The method comprises: the identity information of a user is acquired for identity authentication, a guest room is controlled to unlock and supply power after the identity information passes the identity authentication; a blockchain data is read, a welcoming mode of the TV set is turned on, and the TV set is controlled to play a safety escape route diagram in the blockchain data within a preset time; when the safety escape route diagram is played, the TV set is controlled to play hotel customer service information and the number of loop play times is recorded; when the number of loop play times is greater than or equal to the number of preset times, the welcoming mode of the TV set is turned off and the TV set is controlled to turn on a normal play mode. According to the present disclosure, a fire safety escape route is played on a TV set when a user stays at a hotel for the first time and information of related service scenes of the hotel is shown at the same time, thereby improving the safety awareness of the user, enabling the user to conveniently use the related service of the hotel and bringing convenience to the user.

Of course, those skilled in the art may understand that all or part of processes in the above embodiment method may be implemented by instructing related hardware (such as processor, controller and the like) through a computer program. The program may be stored in a computer readable storage medium. The program may comprise the processes of the above method embodiments when being executed. The storage medium may be a memory, a magnetic disk, an optical disk or the like.

It should be understood that the application of the present disclosure is not limited to the above examples and may be improved or transformed according to the above description for those skilled in the art, and all the improvements and transformations should belong to the protection scope of the appended claims of the present disclosure.

### INDUSTRIAL APPLICABILITY

The embodiment of the present disclosure relates to a method and a system for controlling play of a TV set, a control terminal and a storage medium. A fire safety escape route is played on the TV set when a user stays at a hotel for the first time and information of related service scenes of the hotel is shown at the same time, thereby improving the safety awareness of the user, enabling the user to conveniently use the related service of the hotel and bringing convenience to the user.

## Claims

1. A method for controlling play of a TV set, comprising:
acquiring identity information of a user for identity authentication, controlling a guest room of a hotel to unlock and supply power after the identity information passes the identity authentication;
reading blockchain data, turning on a welcoming mode of the TV set and controlling the TV set to play a safety escape route diagram in the blockchain data within a preset time;
after playing the safety escape route diagram, controlling the TV set to play hotel customer service information and recording the number of loop play times;
when the number of loop play times is greater than or equal to the number of preset times, turning off the welcoming mode of the TV set and controlling the TV set to turn on a normal play mode.

2. The method for controlling play of the TV set according to claim 1, wherein the acquiring the identity information of the user for identity authentication, controlling the guest room to unlock and supply power after the identity information passes the identity authentication comprises:
when detecting that the user arrives at the guest room and performs the identity authentication, checking the identity of the user according to information registered by a reception or a mobile phone and unlocking the guest room after the identity information passes the identity authentication;
after the guest room is unlocked successfully, a guest room power supply system is turned on when a room card is detected to be inserted or the guest room power supply system is directly turned on to supply power.

3. The method for controlling play of the TV set according to claim 2, the reading blockchain data, turning on the welcoming mode of the TV set and controlling the TV set to play the safety escape route diagram in the blockchain data within the preset time comprises:
after power supply is normal, controlling the TV set to turn on, reading the blockchain data in a blockchain database and setting a loop play counter to zero;
judging whether the welcoming mode of the TV set is turned on, and if yes, controlling the TV set to play the safety escape route diagram in the blockchain data within the preset time and play preselected background music at a same time.

4. The method for controlling play of the TV set according to claim 3, wherein a mode for turning on the welcoming mode of the TV set comprises: entering, by a receptionist, the identity information when the user checks in and a system automatically turns on, and the system automatically turns on in the background when the user checks in independently through the mobile phone.

5. The method for controlling play of the TV set according to claim 3, wherein the welcoming mode is turned on only when the user successfully unlocks the guest room for the first time, the welcoming mode is turned off after execution, and is going to be skipped when the user successfully unlocks the guest room next time.

6. The method for controlling play of the TV set according to claim 3, wherein the after playing the safety escape route diagram, controlling the TV set to play the hotel customer service information and recording the number of loop play times comprises:
after playing the safety escape route diagram, continuously controlling the TV set to play the hotel customer service information in the blockchain data and detecting whether the user sends out an operating instruction to the TV set in real time;
if yes, turning off the welcoming mode of the TV set, if not, playing the hotel customer service information to an end and adding one to the loop play counter.

7. The method for controlling play of the TV set according to claim 6, a method that the user sends out the operating instruction to the TV set comprises:
the user operates the TV set by a remote controller and the user operates the TV set by a mobile phone.

8. The method for controlling play of the TV set according to claim 6,wherein the when the number of loop play times is greater than or equal to the number of preset times, turning off the welcoming mode of the TV set and controlling the TV set to turn on a normal play mode comprises:
judging whether the number of loop play times recorded by the loop play counter is greater than or equal to the number of preset times;
if not, returning to continuously control the TV set to play the safety escape route diagram in the blockchain data within the preset time;
if yes, turning off the welcoming mode of the TV set and controlling the TV set to turn on a normal play mode.

9. The method for controlling play of the TV set according to claim 3, wherein the blockchain data comprises: a safety escape route diagram, hotel customer service information and interested information of the user.

10. The method for controlling play of the TV set according to claim 6, wherein the blockchain database prestores user data and the blockchain data.

11. The method for controlling play of the TV set according to claim 9, wherein the interested information of the user is matched customized information which is recommended to the user after big data analysis is performed according to APP used by the user and personal information.

12. The method for controlling play of the TV set according to claim 9, wherein the hotel customer service information comprises information of hotel banquet hall, meeting room, leisure and entertainment and catering service place.

13. A control terminal, comprising: a memory, a processor and a TV set play control program which is stored in the memory and can operate on the processor, wherein the TV set play control program, when being executed by the processor, enables the processor to implement steps of the method for controlling play of the TV set according to any one of claims 1-12.

14. A system for controlling play of a TV set, comprising the control terminal according to claim 13 and further comprising a TV set connected to the control terminal, wherein
the control terminal is configured to acquire the identity information of a user for identity authentication, control a guest room to unlock and supply power after the identity information passes the identity authentication;
the control terminal reads blockchain data, controls the TV set to turn on a welcoming mode and controls the TV set to play a safety escape route diagram in the blockchain data within the preset time;
after the safety escape route diagram is played, the control terminal controls the TV set to play hotel customer service information and record the number of loop play times; and
when the number of loop play times is greater than or equal to the number of preset times, the contr ol terminal turns off the welcoming mode of the TV set and controls the TV set to turn on a normal play mode.

15. A storage medium, storing a TV set play control program, the TV set play control program, when being executed by a processor, enabling the processor to implement steps of the method for controlling play of the TV set according to any one of claims 1-12.
